# EUROPEAN PATENT SPECIFICATION

(11) **EP 2 547 619 B1**
(45) Date of publication and mention of the grant of the patent: **25.10.2017**
(21) Application number: 11709303.9
(22) Date of filing: 14.03.2011
(51) Int. Cl.: C01B 3/32, C01B 3/38, C01B 3/48, C01B 3/50, C01B 3/56, C01B 32/50, C10J 3/00, C10K 1/00, C10K 3/04

(54) **A PROCESS FOR PRODUCING HYDROGEN**
VERFAHREN ZUR HERSTELLUNG VON WASSERSTOFF
PROCÉDÉ DE PRODUCTION D'HYDROGÈNE

(30) Priority: 16.03.2010 US 314218 P
(43) Date of publication of application: 23.01.2013
(73) Proprietor: Shell Oil Company, Houston, TX 77252-2463 (US); Shell Internationale Research Maatschappij B.V., 2596 HR Den Haag (NL)
(72) Inventor: GUO, Chang Jie, Houston Texas 77054 (US); IYER, Mahesh Venkataraman, Houston Texas 77077 (US)
(74) Representative: Matthezing, Robert Maarten
(86) International application number: PCT/US2011/028332
(87) International publication number: WO 2011/115899

(56) References cited:
- WO-A1-2010/075164
- JP-A- 2001 348 204
- JP-A- 2007 020 407
- US-A1- 2001 023 034
- RASS-HANSEN J ET AL: "Steam reforming of technical bioethanol for hydrogen production", INTERNATIONAL JOURNAL OF HYDROGEN ENERGY, ELSEVIER SCIENCE PUBLISHERS B.V., BARKING, GB, vol. 33, no. 17, 1 September 2008 (2008-09-01), pages 4547-4554, XP025771115, ISSN: 0360-3199, DOI: DOI:10.1016/J.IJHYDENE.2008.06.020 [retrieved on 2008-08-19]
- PAPADIAS D D ET AL: "An analytical and experimental investigation of high-pressure catalytic steam reforming of ethanol in a hydrogen selective membrane reactor", INTERNATIONAL JOURNAL OF HYDROGEN ENERGY, ELSEVIER SCIENCE PUBLISHERS B.V., BARKING, GB, vol. 35, no. 5, 1 March 2010 (2010-03-01), pages 2004-2017, XP026887027, ISSN: 0360-3199, DOI: DOI:10.1016/J.IJHYDENE.2009.12.042 [retrieved on 2010-01-12]

## Description

### Field of Invention

This invention relates to an improved process for producing hydrogen.

### Background

Hydrogen will play an important role in meeting the world's future sustainable energy needs. However, many conventional hydrogen production processes are disfavored because they emit significant amounts of carbon dioxide due to the use of fossil fuel feedstocks.

It is desirable to develop a process for producing hydrogen that uses renewable feedstocks and less energy. In addition, it would be beneficial if such a process had a smaller carbon footprint than conventional hydrogen production processes.

U.S. Patent No. 6,387,554 to Verykios describes a process for the production of hydrogen and electrical energy, with zero emissions of pollutants, from ethanol which is produced from biomass, the process is characterized by the partial oxidation/reforming of ethanol with water for hydrogen production which is subsequently fed to a fuel cell for production of electrical energy.

Japanese Patent Application No. JP2007020407A describes an all-in-one power generation unit which converts biomass to both electrical energy and kinetic energy. In such unit, firstly aqueous ethanol is produced from biomass fermentation, and then its water content is reduced before being subjected to low pressure reforming to produce low pressure hydrogen. Electrical energy is produced from the low pressure hydrogen by feeding it to a solid oxide fuel cell. Further, waste heat emanating from the solid oxide fuel cell is converted to kinetic energy via a Stirling engine.

U.S. Patent No. 4,273,621 describes a process for dehydrating aqueous ethanol by utilising high-pressure distillation to produce a vapour phase ethanol-water admixture, which is then dried under pressure in the presence of CO₂ and crystalline zeolite type 3A.

Papadias et al. (International Journal of Hydrogen Energy v.35, 2010, pp. 2004-2017) sets out the conclusions of a computer-generated kinetic modelling study looking at the reforming of ethanol for the production of hydrogen across a range of reforming pressures, reforming temperatures and steam-carbon ratios.

Japanese Patent Application No. 2001348204A describes a method for steam reforming a mixture of aqueous ethanol and other hydrocarbons described therein in the presence of an oxidising gas. Since steam reforming is an endothermic reaction, the combustion of the hydrocarbons in the presence of the oxidising gas provides heat for the steam reforming.

### Summary

This invention provides a process for producing hydrogen comprising: (a) producing an aqueous feed stream comprising 5% to 15% wt. ethanol by a biomass fermentation process; (b) pumping the feed stream to a pressure in a range of from 0.7 MPa to 4.1 MPa (100 psi to 600 psi); (c) separating at least a portion of the water from the feed stream so that the content of ethanol in the resulting reformer feed stream is in the range of from 15% to 35% wt; and (d) contacting the reformer feed stream with a catalyst in a reformer under high pressure reforming conditions to produce a reformer product stream comprising hydrogen, wherein the pressure in the reformer is in a range of from 0.7 MPa to 4.1 MPa (100 psi to 600 psi), and wherein a hydrocarbon is fed at step (d) with the reformer feed stream, to produce reformer product stream hydrogen at a pressure of 0.7 MPa to 4.1 MPa (100 psig to 600 psig).

### Brief Description of Drawings

Figure 1 is a process flow diagram of an embodiment of the invention.
Figure 2 is a process flow diagram of a typical fuel ethanol production process followed by an ethanol steam reforming process.
Figure 3 is a process flow diagram of a conventional low pressure ethanol reforming process.

### Detailed Description

The invention provides a process for producing hydrogen from a feed stream containing ethanol and water by contacting with a reforming catalyst under high pressure reforming conditions. This process produces high pressure hydrogen without the need for a gaseous compressor since the feedstock to the reformer is pumped as a liquid and subsequent steps after the reformer are carried out in the vapor phase under high pressure conditions.

The feed stream of ethanol and water is produced by a biomass fermentation process which includes any process known to those skilled in the art or developed in the future which comprises fermentation of a biomass and/or the sugars extracted from the biomass to produce an aqueous ethanol-containing liquid.

In one embodiment, the biomass fermentation process uses corn as a starting feed which passes through a series of steps including milling, cooking/liquefaction, saccharification, fermentation and solids removal to produce an aqueous ethanol-containing liquid. Alternatively, sugar cane, syrup, beet juice, molasses, cellulose, sorbitol, algae, glucose, or acetates, such as ethyl acetate or methyl acetate may be fed to the biomass fermentation process. One of ordinary skill in the art will be able to operate the fermentation process according to known methods. In another embodiment, a second generation biomass feed such as lignocellulosic biomass, for example corn stover, straw, and wood chips, can be used as a feed to the fermentation process. One of ordinary skill in the art will be able to modify this process for any other biomass feed that can be used to produce ethanol.

The feed stream produced by the biomass fermentation process may comprise solids or other byproducts that are removed. The resulting feed stream contains from 5% to 15% wt. of ethanol, preferably from 8% to 12% wt. of ethanol.

The feed stream is pumped to a distillation column, or flash drums or other suitable separation apparatus to remove a portion of the water from the stream. This separation is preferably performed in a simple distillation column with 2-10 stages or in a sequence of flash drums. This separation can be carried out by any known method. The column is designed to produce a reformer feed stream with an ethanol content of from 15% to 35% wt, preferably from 20% to 30% wt. Optional additional heating may be provided to the reformer feed stream before feeding it to the reformer.

This separation is different from the conventional separation that is typically applied to the product of the fermentation process, because in conventional processes, a high purity ethanol stream is desired to meet fuel grade and/or chemical grade specifications. The high purity ethanol stream has an ethanol content of greater than 99% wt. The conventional separation is a very energy intensive process because ethanol and water form an azeotrope under these separation conditions. Generally, additional treatment steps such as zeolite adsorbent based VSA (vacuum swing adsorption) are required in addition to the intensive distillation operation. The cost of treatment significantly adds to the production cost of the 99% pure ethanol. For example, the conventional treatment processes may result in over 50 percent of the actual utility cost in producing ethanol from fermentation based processes.

The separation of this process is a simple distillation or flash step that does not require such a high purity so the azeotropic conditions are not reached and the separation process does not require as much energy.

Another difference from the conventional separation is that the feed stream is pumped to a pressure of from 0.7 MPa to 4.1 MPa (100 psi to 600 psi) before being fed to the distillation column. The conventional separation is not carried out at a high pressure because the higher pressure results in a more difficult separation that requires more energy.

The reformer feed stream exiting the separation apparatus in the vapor phase is fed to the reformer after preheating to produce a reformate comprising primarily hydrogen, carbon dioxide and carbon monoxide and some methane. For hydrogen production purpose, the reformate is preferably a hydrogen rich stream containing more than 50 mol% hydrogen on a dry basis which is further reacted in a water gas shift reaction to convert most of the carbon monoxide into hydrogen and CO₂. The final water gas shift effluent stream contains at least 60 mol% hydrogen on a dry basis.

The reformer feed stream typically has a steam to carbon ratio in the range of from 2 to 4, preferably from 2.5-3.5.

A hydrocarbon stream is fed to the reformer with the reformer feed stream described above. The addition of hydrocarbon affects the steam to carbon ratio in the reformer. When additional hydrocarbon is added, then additional steam can be present while maintaining the desired steam to carbon ratio. This allows the operation of the reformer to be optimized in relation to the degree of separation of water from the feed stream. The separation step may be operated to remove less water if a hydrocarbon stream is added to the reformer.

The hydrocarbon stream comprises a hydrocarbon or mixture thereof with from 1 to 30 carbon atoms, preferably with from 1 to 15 carbon atoms and more preferably with from 1 to 4 carbon atoms. The hydrocarbon stream preferably comprises methane. The hydrocarbon stream can be produced at least partially during the biomass fermentation process. The hydrocarbon stream may comprise natural gas that is produced elsewhere.

As described above, the reformer feed stream contacts a catalyst within the reformer to accelerate the conversion of ethanol to hydrogen. The catalyst may include those catalysts capable of operating at equilibrium under steam reforming operation conditions. For example, the catalyst may include those catalysts capable of operating at equilibrium under reformer operation temperatures of less than 900°C.

The catalyst generally includes a support material and a metal component, which are described in greater detail below. The "support material" as used herein refers to the support material prior to contact with the metal component and an optional "modifier", also discussed in further detail below.

The support material may include transition metal oxides or other refractory substrates, for example. The transition metal oxides may include alumina (including gamma, alpha, delta or eta phases), silica, zirconia or combinations thereof, such as amorphous silica-alumina. In one specific embodiment, the transition metal oxide includes alumina. In another specific embodiment, the transition metal oxide includes gamma alumina.

The support material may have a surface area of from 30 m²/g to 500 m²/g, or from 40 m²/g to 400 m²/g or from 50 m²/g to 350 m²/g. As used herein, the term "surface area" refers to the surface area as determined by the nitrogen BET (Brunauer, Emmett and Teller) method as described in Journal of the American Chemical Society 60 (1938) pp. 309-316. As used herein, surface area is defined relative to the weight of the support material, unless stated otherwise.

The support material may have a pore volume of from 0.1 cc/g to 1 cc/g, or from 0.2 cc/g to 0.95 cc/g or from 0.25 cc/g to 0.9 cc/g. In addition, the support material may have an average particle size of from 0.1 µ to 20µ, or from 0.5 µ to 18µ or from 1 µ to 15 µ (when utilized as in powder form. However, it is contemplated that the support material may be converted into particles having varying shapes and particle sizes by pelletization, tableting, extrusion or other known processes.

In one or more embodiments, the support material is a commercially available support material, such as commercially available alumina powders including, but not limited to, PURAL® Alumina and CATAPAL® Alumina, which are high purity bohemite aluminas sold by Sasol Inc.

The metal component may include a Group VIII transition metal. As used herein, the term "Group VIII transition metal" includes oxides and alloys of Group VIII transition metals. The Group VIII transition metal may include nickel, platinum, palladium, rhodium, iridium, gold, osmium, ruthenium or combinations thereof. In one or more embodiments, the Group VIII transition metal includes nickel. In one specific embodiment, the Group VIII transition metal includes nickel salts, such as nickel nitrate, nickel carbonate, nickel acetate, nickel oxalate, nickel citrate or combinations thereof.

The catalyst may include from about 0.1 wt.% to 60 wt.%, from 0.2 wt.% to 50 wt.% or from 0.5 wt.% to 40 wt.% metal component relative to the total weight of catalyst.

One or more embodiments include contacting the support material or catalyst with a modifier to form a modified support or modified catalyst (which will be referred collectively herein as modified support). For example, the modifier may include a modifier exhibiting selectivity to hydrogen.

In one or more embodiments, the modifier includes an alkaline earth element, such as magnesium or calcium. In one or more specific embodiments, the modifier is a magnesium containing compound. For example, the magnesium containing compound may include magnesium oxide or be supplied in the form of a magnesium salt (e.g., magnesium hydroxide, magnesium nitrate, magnesium acetate or magnesium carbonate).

The catalyst may include from 0.1 wt.% to 15 wt.%, or from 0.5 wt.% to 14 wt.% or from 1 wt.% to 12 wt.% modifier relative to the total weight of support material.

The modified support may have a surface area of from 20 m²/g to 400 m²/g, or from 25 m²/g to 300 m²/g or from 25 m²/g to 200 m²/g.

In one or more embodiments, the catalyst further includes one or more additives. In one or more embodiments, the additive is a promoter. The promoter may be selected from rare earth elements, such as lanthanum. The rare earth elements may include solutions, salts (e.g., nitrates, acetates or carbonates), oxides and combinations thereof.

The catalyst may include from 0.1 wt.% to 15 wt.%, from 0.5 wt.% to 15 wt.% or from 1 wt.% to 15 wt.% additive relative to the total weight of catalyst.

In one or more embodiments, the catalyst includes a greater amount of additive than modifier. For example, the catalyst may include at least 0.1 wt.%, or at least 0.15 wt.% or at least .5 wt.% more additive than modifier. In another embodiment, the catalyst includes substantially equivalent amounts of additive and modifier.

The reformer is operated under high pressure reforming conditions. In one or more embodiments, the reformer may be operated at a reformer operation pressure of less than 2.1 MPa (300 psig), from 0.7 MPa to 4.1, MPa (100 psig to 600 psig), or from 1.4 MPa to 2.8 MPa (200 psig to 400 psig), or from 1.4 MPa to 1.7 MPa (200 psig to 240 psig), or from 1.0 MPa to 1.9 MPa (150 psig to 275 psig), or from 1.0 MPa to 1.7 MPa (150 psig to 250 psig) or from 1.0 MPa to 1.6 MPa (150 psig to 225 psig).

The reformer may be operated at temperatures of less than 900°C, or less than 875°C, or less than 850°C, or from 500°C to 825°C or from 600°C to 825°C. In some instances, the embodiments of the invention are capable of operation at lower reformer temperatures.

Lower reformer temperatures (i.e., temperatures of less than 900°C) can result in a lower utilities demand, lower construction material cost (due at least in part to a reduction in corrosion and stress on process equipment), more favorable water gas shift equilibrium and increased hydrogen levels in the reformate, for example.

The reformer may be operated under steam reforming conditions which are defined by adding substantially no oxygen to the feeds to the reformer. Different reforming processes such as autothermal reforming and catalytic partial oxidation require the addition of oxygen to combust components in the reformer to provide heat. The process of steam reforming excludes the addition of oxygen or at least significant quantities of oxygen. Small amounts of oxygen may be introduced to a steam reforming process, but it is not preferred. Steam reforming conditions can be defined as those in which the amount of oxygen (or air) that is added is less than 2% of the total reformer feed, preferably less than 1% of the total reformer feed and more preferably less than 0.5% of the total reformer feed stream. It is most preferred for no oxygen to be added or at least substantially no oxygen to be added.

In another embodiment, the reformer may be operated under partial oxidation conditions. Partial oxidation systems are based on incomplete combustion. Decomposition of the feed stream to primarily hydrogen and carbon monoxide (CO) occurs through thermal cracking reactions at high temperatures. Autothermal (mixed) reforming is a variation on catalytic partial oxidation in which increased quantities of steam are used to promote steam reforming and reduce coke formation. Both partial oxidation systems and autothermal reforming require oxygen.

Additional hydrogen can be produced via a water gas shift reaction that converts carbon monoxide (CO) into carbon dioxide (CO₂). Therefore, the reformate may optionally be passed to a water-gas shift reaction zone(s) where the process stream (e.g., the reformate) is further enriched in hydrogen by reaction of carbon monoxide present in the process stream with steam in a water-gas shift reaction to form a water-gas shift product stream having a greater hydrogen concentration than the hydrogen concentration of the reformate.

The water-gas shift reaction zone may include any reactor (or combination of reactors) capable of converting carbon monoxide to hydrogen. For example, the reactor may include a fixed-bed catalytic reactor. The water-gas shift reactor includes a water-gas shift catalyst. The water-gas shift catalyst may include any catalyst capable of promoting the water-gas shift reaction. For example, the water-gas shift catalyst may include alumina, chromia, iron, copper, zinc, the oxides thereof or combinations thereof. In one or more embodiments, the water-gas shift catalyst includes commercially available catalysts from BASF Corp, Sud Chemie or Haldor Topsoe.

The water-gas shift reaction generally goes to equilibrium at the temperatures required to drive the reforming reaction (therefore, hindering the production of hydrogen from carbon monoxide). Therefore, the water-gas shift reactor typically operates at an operation temperature that is lower than reformer operation temperature (e.g., at least 50°C less, or at least 75°C less or at least 100°C less). For example, the water-gas shift reaction may occur at a temperature of from about 200°C to about 500°C, or from 250°C to about 475°C or from 275°C to about 450°C.

In one or more embodiments, the water-gas shift reaction is operated in a plurality of stages. For example, the plurality of stages may include a first stage and a second stage.

Generally, the first stage is operated at a temperature that is higher than that of the second stage (e.g., the first stage is high temperature shift and the second stage is a low temperature shift). In one or more embodiments, the first stage may operate at a temperature of from 350°C to 500°C, or from 360°C to 480°C or from 375°C to 450°C. The second stage may operate at a temperature of from 200°C to 325°C, or from 215°C to 315°C or from 225°C to 300°C. It is contemplated that the plurality of stages may occur in a single reaction vessel or in a plurality of reaction vessels.

The hydrogen may be used directly in a variety of applications, such as petrochemical processes, without further reaction or purification. The hydrogen produced is already at high pressure since the entire system is operated at high pressure. For purposes of this application, the high pressure may be defined as a pressure of less than 4.1 MPa (600 psig), from 0.7 MPa to 2.8 MPa (100 psig to 400 psig), or from 1.4 MPa to 2.8 MPa (200 psig to 400 psig), or from 1.4 MPa to 1.9 MPa (200 psig to 275 psig), or from 1.0 MPa to 2.1 MPa (150 psig to 300 psig), or from 1.0 MPa to 1.7 MPa (150 psig to 250 psig) or from 1.0 MPa to 1.6 MPa (150 psig to 225 psig). In other conventional ethanol reforming processes, the hydrogen produced in a low pressure or atmospheric reforming step must be pressurized in a compressor which is a capital expense as well as results in a large operating and maintenance expense.

The reforming process may further include purification of the hydrogen. The purification process may include separation, such as separation of the hydrogen from the reformate or water-gas shift product stream, to form a purified hydrogen stream. For example, the separation process may include adsorption, such as pressure swing adsorption processes which form a purified hydrogen stream and a tail gas. Alternatively, the separation process may include membrane separation to form a purified hydrogen stream and a carbon dioxide rich stream. One or more embodiments include both adsorption and membrane separation.

The purified hydrogen stream may include at least 95 vol.%, or at least 98 vol.% or at least 99 vol.% hydrogen relative to the weight of the purified hydrogen stream, for example.

The system is preferably heat integrated as much as possible. The reformer feed stream is heated prior to introduction into the reformer. In addition, product streams (e.g., the reformate, the water-gas shift product stream or combinations thereof) may require chilling (e.g., a reduction of the temperature) prior to subsequent processes. Generally, reforming processes have included heat exchange of each process stream (e.g., reformer feed stream and product streams) with an externally supplied heat exchange fluid (e.g., within a heat exchanger) to control the temperature thereof (either heating or chilling as required), thereby adding size and weight to the overall reforming system.

However, in one or more specific embodiments of the invention, the process includes contacting one or more of the process streams with another process stream (rather than an external heat exchange fluid) to exchange heat therebetween. For example, one or more embodiments include contacting the reformate with the reformer feed stream prior to introduction into the reformer to transfer heat from the reformate to the reformer feed stream (thereby heating the reformer feed stream and cooling the reformate). The process may include contacting the water-gas shift product stream with the reformer feed stream prior to introduction into the reformer. It is contemplated that while at least a portion of the heat exchange requirements of the process may be replaced by heat exchange contact between feed streams and product streams within the process, a portion of the required heat exchange may be accomplished by contact with an externally supplied heat exchange fluid.

In another embodiment, the heat required may be provided by combustion of byproducts and/or solids from the biomass fermentation process described above.

One or more specific embodiments include sequentially heating the reformer feed stream by sequential contact with increasingly warmer product streams. For example, one or more specific embodiments include heat exchange contact with the water-gas shift product stream, such as the first stage water-gas shift product stream, the second water-gas shift product stream or combinations thereof, followed by heat exchange contact with the reformate as described previously.

The heat exchange contact may occur by passing the reformer feed stream through a heat exchanger counter-current to the product stream. In one or more embodiments, the feed stream passes counter-current to the product stream.

In addition to heating the reformer feed stream, the heat exchange contact reduces the temperature of the reformate without the need for introduction of an outside heat or cooling source. However, when external heat exchange fluids are utilized within a portion of the process, it is contemplated that the heat exchangers utilizing the external heat exchange fluids will be smaller and require less power than those of conventional processes employing solely externally supplied heat exchange fluids due to the reduced temperature difference between the externally supplied heat exchange fluid and the process stream requiring heat exchange.

As discussed above, the reformer is generally heated by an external heat source. However, one or more embodiments of the invention utilize a process stream as a reformer heat source. For example, one or more specific embodiments utilize tail gas to at least partially heat the reformer. For example, the tail gas may be utilized as a fuel to the combustion furnace that generates hot flue gases that heat the reformer. It is further contemplated that the tail gas may be further heated by heat exchange contact with a heat exchange fluid prior to direct heating of the reformer via the combustion furnace. Alternatively, one or more specific embodiments utilize the byproducts from the fermentation process as a fuel to the combustion furnace that produces hot flue gases to heat the reformer.

Further, as discussed above, steam reforming processes include introducing steam into the reformer. Generally, the steam is provided to the reforming process from an external source. However, in this invention, steam is already present and its content adjusted by the distillation or flashing conditions to suit the required concentration by the reformer. One or more embodiments of the invention include utilizing condensate produced from the one or more heat exchangers as the steam for the reformer. While the condensate is often in vapor form, it is contemplated that the condensate may be liquid when supplied to the reformer, thereby requiring vaporization prior to introduction into the reformer. Utilizing the condensate for at least a portion of the required steam minimizes the need for an external water supply, thereby reducing the overall process water consumption.

In one or more embodiments, the CO₂ produced during the fermentation process and/or during the formation of hydrogen may be captured and utilized for high pressure injection applications, such as oil recovery. Such applications enhance the oil and gas recovery process, while at the same time minimizing the carbon impact on the environment (the carbon dioxide is turned into a nonvolatile component within the earth).

It is further contemplated that the CO₂ formed by the fermentation step can be combined with the CO₂ recovered from the effluent of the water gas shift reactors, and be compressed and sequestrated, thus preventing the release of CO₂ into the atmosphere.

### Examples

### Example 1

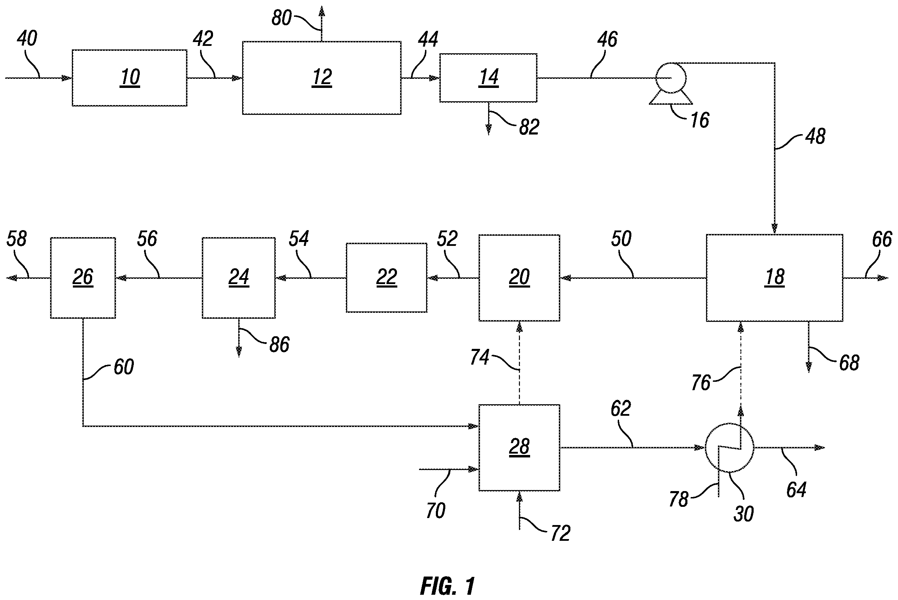

This example demonstrates the simulated results of an embodiment of the invention. The details provided below and in Table 1 show the results of an ASPEN Plus® simulation where the ethanol produced by a fermentation process is passed through a simple distillation step and then into a reformer at high pressure operating conditions. The example is described with respect to Figure 1. Figure 1 depicts the main steps of the process, but it is not intended to be a complete diagram of all equipment, valves, and piping that would be necessary to the process.

In Figure 1, block 10 represents the bio-mass preprocessing step. The details of this step will depend on the type of biomass fed to the process. Block 12 represents the saccharification and fermentation of the pre-processed bio-mass. These may be carried out in any number of steps and according to any process known to one of ordinary skill in the art. In block 14, solids are separated via line 82 and a mixture comprising ethanol and water is passed to pump 16 via line 46. The mixture is pumped to a column 18 where a portion of the water is separated and passed through line 66. The column 18 has been described in this application, but it is preferably a simple distillation column. The remaining ethanol/water vapor mixture passes via line 50 to reformer 20 where the high pressure reforming occurs. The reformer products are passed via line 52 to a water gas shift reaction zone 22. The water gas shift reaction zone may comprise multiple reactors operated at different temperatures. The reaction zone 22 preferably comprises at least one high temperature water gas shift reactor and one low temperature water gas shift reactor. The water gas shift products are passed via line 54 to a carbon dioxide removal step 24. The carbon dioxide separated from the process can be sequestered as described above. The products from that separation are then passed to a PSA (pressure swing adsorption) system, where the hydrogen is removed from the process via hydrogen product line 58. The tail gas is passed via line 60 to furnace 28. The tail gas, along with air fed via line 70 and optionally natural gas fed via line 72 is combusted in the furnace to provide heat to the reformer. The hot flue gas in line 62 may be used to provide heat to the column 18. Table 1 provides process information calculated during an ASPEN Plus® simulation of an embodiment as described in this example.

**TABLE 1**

| Line # | 46 | 48 | 50 | 66 | 52 | 54 | 56 | 58 | 86 | 60 | 72 | 80 |
|---|---|---|---|---|---|---|---|---|---|---|---|---|
| Mass Flow kg/hr | | | | | | | | | | | | |
| WATER | 407175 | 407175 | 87209 | 319966 | 61820 | 48248 | 87 | 0 | 0 | 127 | 0 | 0 |
| ETHANOL | 37825 | 37825 | 37614 | 211 | 0 | 0 | 0 | 0 | 0 | 0 | 0 | 0 |
| CO | 0 | 0 | 0 | 0 | 21525 | 422 | 422 | 0 | 0 | 413 | 0 | 0 |
| CO₂ | 0 | 0 | 0 | 0 | 32067 | 65224 | 6522 | 0 | 58701 | 6218 | 0 | 36312 |
| H₂ | 0 | 0 | 0 | 0 | 7231 | 8750 | 8750 | 7525 | 0 | 1225 | 0 | 0 |
| CH₄ | 0 | 0 | 0 | 0 | 2179 | 2179 | 2179 | 0 | 0 | 2162 | 3748 | 0 |
| Total Flow kg/hr | 445000 | 445000 | 124823 | 320177 | 124822 | 124822 | 17960 | 7525 | 58701 | 10144 | 3748 | 36312 |
| Temperature K | 298 | 298 | 471 | 479 | 1098 | 491 | 297 | 289 | 298 | 278 | 298 | 298 |
| Pressure atm | 1.0 | 18.0 | 17.1 | 17.5 | 16.8 | 16.1 | 15.9 | 15.1 | 3.0 | 1.4 | 3.4 | 1.0 |

### Comparative Example 1

This example demonstrates the simulated results of a conventional process. The details provided below and in Table 2 show the results of an ASPEN Plus® simulation where high-purity (fuel/chemical grade) ethanol is mixed with water and then directly fed to the reforming process.

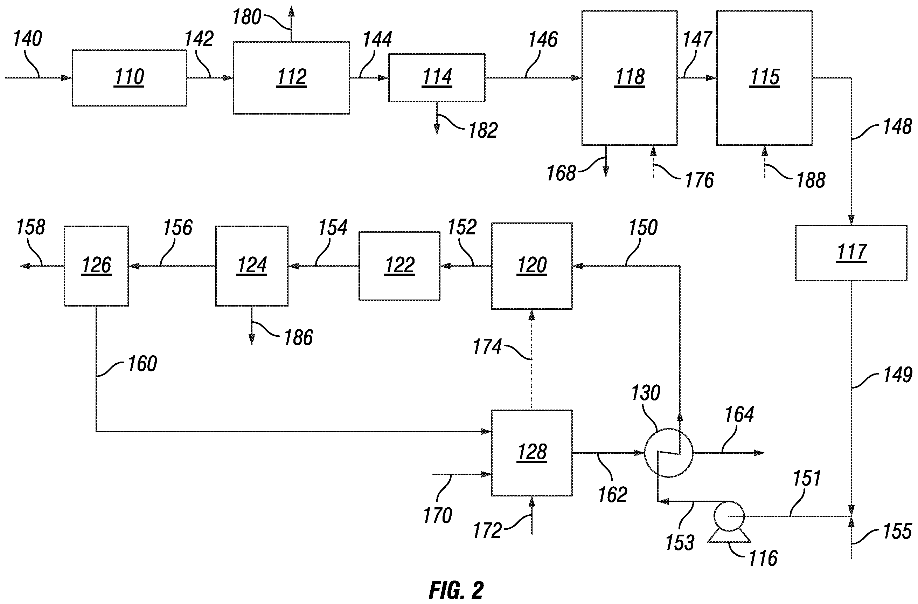

The example is described with respect to Figure 2. Figure 2 depicts a conventional ethanol steam reforming process. Typically, fuel/chemical grade ethanol is prepared by steps 110 to 117. Blocks 110 to 114 are similar to blocks 10 to 14 in Figure 1 and correspond to the bio-mass preprocessing; saccharification and fermentation; and solids removal. The mixture containing ethanol and water produced by steps 110 to 114 is at ambient pressures and is passed via line 146 to distillation column 118. Column 118 is not a simple column as described in Example 1. The column typically has 30 to 45 stages operating at low pressures. The product from the distillation column is passed to rectification column 115 and then to a molecular sieve separation step 117. The rectification column typically has 30-45 stages operating at low pressures. Due to the high purity requirement and the formation of an azeotrope between water and ethanol, the production of chemical/fuel grade ethanol requires extensive distillation, rectification with reflux and further steps to remove the water. The processes related to blocks 110 to 117 are operated separately from the remainder of the process and the high purity ethanol is typically transported to a location where it can be further processed and fed to a reformer.

The high purity ethanol produced is passed to pump 116 after mixing it with water fed in via line 155. The water/ethanol mixture is heated in heat exchanger 130 and passed to the reformer 120. The reformer products are passed via line 152 to a water gas shift reaction zone 122. The water gas shift reaction zone may comprise multiple reactors operated at different temperatures. The reaction zone 122 preferably comprises at least one high temperature water gas shift reactor and one low temperature water gas shift reactor. The water gas shift products are passed via line 154 to a carbon dioxide removal step 124. The carbon dioxide separated from the process can be sequestered as described above. The products from that separation are then passed to a PSA (pressure swing adsorption) system, where the hydrogen is removed from the process via hydrogen product line 158. The tail gas is passed via line 160 to furnace 128. The tail gas, along with air fed via line 170 and optionally natural gas fed via line 172 is combusted in the furnace to provide heat to the reformer. The hot flue gas in line 162 is used to preheat the ethanol/water mixture. Table 2 provides process information calculated during an ASPEN Plus® simulation of an embodiment as described in this example.

**TABLE 2**

| Line # | 146 | 148 | 149 | 153 | 150 | 152 | 154 | 156 | 158 | 160 | 172 | 180 | 186 |
|---|---|---|---|---|---|---|---|---|---|---|---|---|---|
| Mass Flow kg/hr | | | | | | | | | | | | | |
| WATER | 404902 | 5129 | 0 | 88253 | 88253 | 62747 | 49228 | 89 | 0 | 126 | 0 | 0 | 0 |
| ETHANOL | 37614 | 37614 | 37614 | 37614 | 37614 | 0 | 0 | 0 | 0 | 0 | 0 | 0 | 0 |
| CO | 0 | 0 | 0 | 0 | 0 | 21416 | 396 | 396 | 0 | 387 | 0 | 0 | 0 |
| CO₂ | 0 | 0 | 0 | 0 | 0 | 32297 | 65323 | 6532 | 0 | 6219 | 0 | 36109 | 58791 |
| H₂ | 0 | 0 | 0 | 0 | 0 | 7250 | 8762 | 8762 | 7536 | 1227 | 0 | 0 | 0 |
| CH₄ | 0 | 0 | 0 | 0 | 0 | 2158 | 2158 | 2158 | 0 | 2140 | 2620 | 0 | 0 |
| Total Flow kg/hr | 442516 | 42743 | 37614 | 125867 | 125867 | 125867 | 125867 | 17937 | 7536 | 10099 | 2620 | 36109 | 58791 |
| Temperature K | 298 | 298 | 298 | 302 | 953 | 1098 | 488 | 297 | 289 | 278 | 298 | 298 | 298 |
| Pressure atm | 1.0 | 1.0 | 1.0 | 17.7 | 17.3 | 16.9 | 16.3 | 16.1 | 15.2 | 1.4 | 3.4 | 1.0 | 3.0 |

### Comparative Example 2

This example demonstrates the simulated results of a conventional process where the reformer is operated at low pressure. The details provided below and in Table 3 show the results of an ASPEN Plus® simulation where the reforming was carried out at low pressure and the hydrogen produced was fed through a compressor to produce high pressure hydrogen.

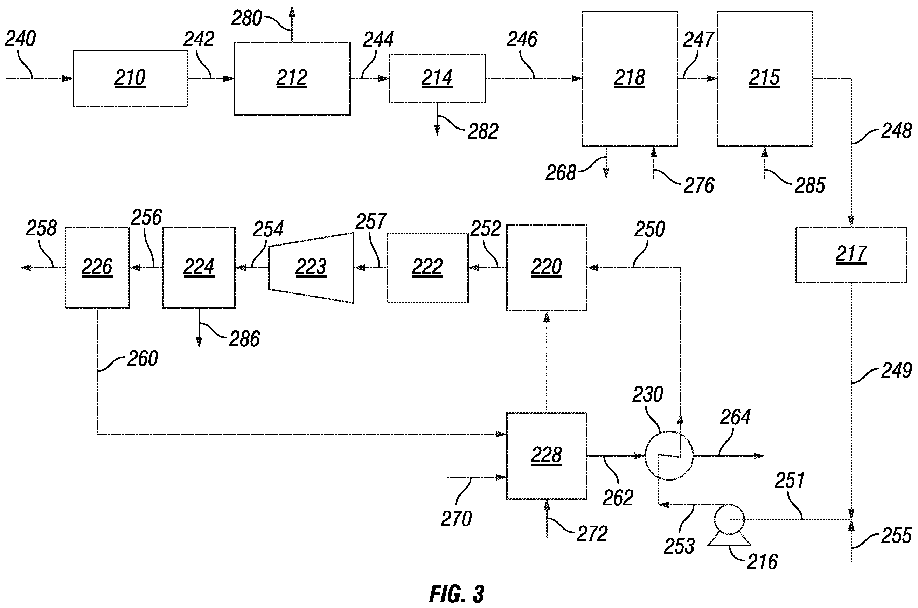

The example is described with respect to Figure 3. Figure 3 depicts a conventional ethanol steam reforming process with a low pressure reformer. Typically, fuel/chemical grade ethanol is prepared by steps 210 to 217. Blocks 210 to 214 are similar to blocks 10 to 14 in Figure 1 and correspond to the bio-mass preprocessing; saccharification and fermentation; and solids removal. The mixture containing ethanol and water produced by steps 210 to 214 is at ambient pressures and is passed via line 246 to distillation column 218. Column 218 is not a simple column as described in Example 1. The column typically has 30 to 45 stages operating at low pressures. The product from the distillation column is passed to rectification column 215 and then to a molecular sieve separation step 217. The rectification column typically has 30-45 stages operating at low pressures. Due to the high purity requirement and the formation of an azeotrope between water and ethanol, the production of chemical/fuel grade ethanol requires extensive distillation, rectification with reflux and further steps to remove the water. The processes related to blocks 210 to 217 are operated separately from the remainder of the process and the high purity ethanol is typically transported to a location where it can be further processed and fed to a reformer.

The high purity ethanol produced is passed to pump 116 after mixing it with water fed in via line 255. The water/ethanol mixture is heated in heat exchanger 230 and passed to the reformer 220. The reformer products are passed via line 252 to a water gas shift reaction zone 222. The water gas shift reaction zone may comprise multiple reactors operated at different temperatures. The reaction zone 222 preferably comprises at least one high temperature water gas shift reactor and one low temperature water gas shift reactor. The water gas shift products are passed via line 257 to a multi-stage compressor 223 and the compressor outlet stream 254 is directed to a carbon dioxide removal step 224. The carbon dioxide separated from the process can be sequestered as described above. The products from that separation are then passed to a PSA (pressure swing adsorption) system, where the hydrogen is removed from the process via hydrogen product line 258. The tail gas is passed via line 260 to furnace 228. The tail gas, along with air fed via line 270 and optionally natural gas fed via line 272 is combusted in the furnace to provide heat to the reformer. The hot flue gas in line 262 is used to preheat the ethanol/water mixture. Table 3 provides process information calculated during an ASPEN Plus® simulation of an embodiment as described in this example.

**TABLE 3**

| Line # | 246 | 248 | 249 | 253 | 250 | 252 | 257 | 254 | 258 | 260 | 286 | 280 |
|---|---|---|---|---|---|---|---|---|---|---|---|---|
| Mass Flow kg/hr | | | | | | | | | | | | |
| WATER | 404906 | 5129 | 0 | 88254 | 88254 | 60239 | 44632 | 537 | 0 | 537 | 0 | 0 |
| ETHANOL | 37614 | 37614 | 37614 | 37614 | 37614 | 0 | 0 | 0 | 0 | 0 | 0 | 0 |
| CO | 0 | 0 | 0 | 0 | 0 | 24927 | 661 | 660 | 1 | 659 | 0 | 0 |
| CO₂ | 0 | 0 | 0 | 0 | 0 | 32603 | 70730 | 70574 | 0 | 7057 | 63516 | 36110 |
| H₂ | 0 | 0 | 0 | 0 | 0 | 8064 | 9810 | 9810 | 8731 | 1079 | 0 | 0 |
| CH₄ | 0 | 0 | 0 | 0 | 0 | 36 | 36 | 36 | 0 | 36 | 0 | 0 |
| Total Flow kg/hr | 442520 | 42743 | 37614 | 125868 | 125868 | 125868 | 125868 | 81616 | 8731 | 72885 | 0 | 0 |
| Temperature K | 298 | 298 | 298 | 301 | 964 | 1098 | 501 | 297 | 297 | 279 | 298 | 298 |
| Pressure atm | 1 | 1.0 | 1.0 | 2.5 | 2.1 | 1.8 | 1.1 | 20.3 | 19.6 | 1.4 | 3.0 | 1.0 |

## Claims

1. A process for producing hydrogen comprising:
a. producing an aqueous feed stream comprising 5% to 15% wt. ethanol by a biomass fermentation process;
b. pumping the feed stream to a pressure in a range of from 0.7 MPa to 4.1 MPa (100 psi to 600 psi);
c. separating at least a portion of the water from the feed stream so that the content of ethanol in the resulting reformer feed stream is in the range of from 15% to 35% wt; and
d. contacting the reformer feed stream with a catalyst in a reformer under high pressure reforming conditions to produce a reformer product stream comprising hydrogen,
wherein the pressure in the reformer is in a range of from 0.7 MPa to 4.1 MPa (100 psi to 600 psi), and
wherein a hydrocarbon is fed at step (d) with the reformer feed stream, to produce reformer product stream hydrogen at a pressure of 0.7 MPa to 4.1 MPa (100 psig to 600 psig).

2. A process as claimed in claim 1 wherein the concentration of ethanol in the reformer feed stream is in the range of from 20% to 35 wt%.

3. A process as claimed in claim 1 wherein the concentration of ethanol in the reformer feed stream is in the range of from 25% to 30 wt%.

4. A process as claimed in any of claims 1-3 wherein the pressure in the reformer is in a range of from 1.4 MPa to 2.1 MPa (200 psi to 300 psi).

5. A process as claimed in any of claims 1 to 4 further comprising a furnace that provides heat to the reformer wherein the flue gas from the furnace and/or the hot reformer product stream provides heat to the separation of step (c).

6. A process as claimed in claim 5 wherein a biomass waste produced in step (a) is used as a fuel to the furnace.

7. A process as claimed in any of claims 5 to 6 wherein a biogas is used as a fuel to the furnace.

8. A process as claimed in any of claims 1 to 7 further comprising passing the reformer product stream through one or more water gas shift reaction zones to produce additional hydrogen and carbon dioxide.

9. A process as claimed in claim 8 wherein the carbon dioxide produced by the water gas shift reaction is separated from the process stream and then combined with carbon dioxide produced in step (a).

10. A process as claimed in any of claims 1 to 9 wherein the carbon dioxide is not released to the atmosphere.

11. A process as claimed in any of claims 1 to 10 wherein the no oxygen is added to the reformer feed stream.

12. A process as claimed in any of claim 1 to 11 wherein the hydrocarbon is a compound having from 1 to 8 carbon atoms.

13. A process as claimed in any of claims 1 to 12 wherein the hydrocarbon is selected from the group consisting of methane, ethane, propane and butane.

14. A process as claimed in any of claims 1 to 13 wherein the hydrocarbon comprises biogas.

## Patentansprüche

1. Verfahren zur Herstellung von Wasserstoff, umfassend:
a. Herstellen eines wässrigen Zuführungsstromes, umfassend 5% bis 15 Gew.-% Ethanol, mit Hilfe eines Verfahrens der Biomassevergärung;
b. Pumpen des Zuführungsstromes bis auf einen Druck im Bereich von 0,7 MPa bis 4,1 MPa (100 psi bis 600 psi);
c. Abtrennen mindestens eines Teils des Wassers von dem Zuführungsstrom, sodass der Gehalt an Ethanol in dem resultierenden Reformer-Zuführungsstrom im Bereich von 15% bis 35 Gew.-% liegt; und
d. Kontaktieren des Reformer-Zuführungsstromes mit einem Katalysator in einem Reformer unter Bedingungen des Reformierens unter hohem Druck, um ein Reformerproduktstrom zu erzeugen, der Wasserstoff umfasst, wobei der Druck in dem Reformer im Bereich von 0,7 MPa bis 4,1 MPa (100 psi bis 600 psi) liegt,
und
wobei in Schritt (d) mit dem Reformer-Zuführungsstrom ein Kohlenwasserstoff zugeführt wird, um Reformerproduktstrom-Wasserstoff bei einem Druck von 0,7 MPa bis 4,1 MPa (100 psig bis 600 psig) zu erzeugen.

2. Verfahren nach Anspruch 1, wobei die Konzentration von Ethanol in dem Reformer-Zuführungsstrom im Bereich von 20% bis 35 Gew.-% liegt.

3. Verfahren nach Anspruch 1, wobei die Konzentration von Ethanol in dem Reformer-Zuführungsstrom im Bereich 25% bis 30 Gew.-% liegt.

4. Verfahren nach einem der Ansprüche 1 bis 3, wobei der Druck in dem Reformer im Bereich von 1,4 MPa bis 2,1 MPa (200 psi bis 300 psi) liegt.

5. Verfahren nach einem der Ansprüche 1 bis 4, ferner umfassend einen Ofen, der dem Reformer Wärme bereitstellt, wobei das Rauchgas aus dem Ofen und/oder der heiße Reformerproduktstrom Wärme für die Trennung in Schritt c) bereitstellen.

6. Verfahren nach Anspruch 5, wobei ein in Schritt (a) erzeugter Biomasseabfall als ein Brennstoff für den Ofen verwendet wird.

7. Verfahren nach einem der Ansprüche 5 bis 6, wobei ein Biogas als Brennstoff für den Ofen verwendet wird.

8. Verfahren nach einem der Ansprüche 1 bis 7, ferner umfassend den Reformerproduktstrom durch eine oder mehrere Wassergas-Shift-Reaktionszonen leiten, um zusätzlichen Wasserstoff und Kohlendioxid zu erzeugen.

9. Verfahren nach Anspruch 8, wobei das hergestellte Kohlendioxid durch die Wassergas-Shift-Reaktion von dem Prozessstrom getrennt und anschließend mit Kohlenstoffdioxid vereint wird, das in Schritt (a) erzeugt wird.

10. Verfahren nach einem der Ansprüche 1 bis 9, wobei das Kohlendioxid nicht in die Atmosphäre freigesetzt wird.

11. Verfahren nach einem der Ansprüche 1 bis 10, wobei dem Reformer-Zuführungsstrom kein Sauerstoff zugesetzt ist.

12. Verfahren nach einem der Ansprüche 1 bis 11, wobei der Kohlenwasserstoff eine Verbindung mit 1 bis 8 Kohlenstoffatomen ist.

13. Verfahren nach einem der Ansprüche 1 bis 12, wobei der Kohlenwasserstoff ausgewählt ist aus der Gruppe bestehend aus Methan, Ethan, Propan und Butan.

14. Verfahren nach einem der Ansprüche 1 bis 13, wobei der Kohlenwasserstoff Biogas umfasst.

## Revendications

1. Procédé de production d'hydrogène comprenant les étapes consistant à :
a. produire un courant aqueux d'alimentation comprenant de 5 % à 15 % en poids d'éthanol par le biais d'un procédé de fermentation de biomasse ;
b. pomper le courant d'alimentation à une pression comprise dans une plage allant de 0,7 MPa à 4,1 MPa (100 psi à 600 psi) ;
c. séparer au moins une partie de l'eau et le courant d'alimentation de sorte que la concentration en éthanol dans le courant d'alimentation de l'unité de conversion résultant se situe dans la plage allant de 15 % à 35 % en poids ; et
d. mettre en contact le courant d'alimentation de l'unité de conversion avec un catalyseur à l'intérieur d'une unité de conversion dans des conditions de conversion à haute pression afin de produire un courant de produit d'unité de conversion comprenant de l'hydrogène, dans lequel la pression dans l'unité de conversion se situe dans une plage allant de 0,7 MPa à 4,1 MPa (100 psi à 600 psi),
et
dans lequel un hydrocarbure est alimenté à l'étape (d) par le courant d'alimentation de l'unité de conversion,
afin de produire de l'hydrogène de courant de produit d'unité de conversion à une pression de 0,7 MPa à 4,1 MPa (100 psi à 600 psi).

2. Procédé selon la revendication 1, dans lequel la concentration en éthanol dans le courant d'alimentation de l'unité de conversion se situe dans la plage allant de 20 % à 35 % en poids.

3. Procédé selon la revendication 1, dans lequel la concentration en éthanol dans le courant d'alimentation de l'unité de conversion se situe dans la plage allant de 25 % à 30 % en poids.

4. Procédé selon l'une quelconque des revendications 1 à 3 dans lequel la pression dans l'unité de conversion se situe dans une plage allant de 1,4 MPa à 2,1 MPa (200 psi à 300 psi).

5. Procédé selon l'une quelconque des revendications 1 à 4 comprenant en outre un four qui fournit de la chaleur à l'unité de conversion, le gaz de combustion du four et/ou du courant de produit d'unité de conversion chaud fournissant de la chaleur pour la séparation de l'étape (c).

6. Procédé selon la revendication 5 dans lequel des déchets de la biomasse produits à l'étape (a) sont utilisés comme carburant pour le four.

7. Procédé selon l'une quelconque des revendications 5 à 6 dans lequel du biogaz est utilisé comme carburant pour le four.

8. Procédé selon l'une quelconque des revendications 1 à 7 comprenant en outre le passage du courant de produit d'unité de conversion par une ou plusieurs zones de réaction de conversion à la vapeur d'eau afin de produire de l'hydrogène et du dioxyde de carbone additionnels.

9. Procédé selon la revendication 8 dans lequel le dioxyde de carbone produit par la réaction de conversion à la vapeur d'eau est séparé du courant de process puis combiné au dioxyde de carbone produit à l'étape (a).

10. Procédé selon l'une quelconque des revendications 1 à 9, dans lequel le dioxyde de carbone n'est pas libéré dans l'atmosphère.

11. Procédé selon l'une quelconque des revendications 1 à 10, dans lequel l'on n'ajoute pas d'oxygène au courant d'alimentation de l'unité de conversion.

12. Procédé selon l'une quelconque des revendications 1 à 11 dans lequel l'hydrocarbure est un composé ayant de 1 à 8 atomes de carbone.

13. Procédé selon l'une quelconque des revendications 1 à 12 dans lequel l'hydrocarbure est sélectionné dans le groupe constitué du méthane, de l'éthane, du propane et du butane.

14. Procédé selon l'une quelconque des revendications 1 à 13 dans lequel l'hydrocarbure comprend du biogaz.
